# EUROPÄISCHE PATENTANMELDUNG

(11) **EP 3 167 997 A1**
(43) Veröffentlichungstag der Anmeldung: **17.05.2017**
(21) Anmeldenummer: 15193840.4
(22) Anmeldetag: 10.11.2015
(51) Int. Cl.: B23K 26/342, B22F 3/105, B29C 67/00, B23K 26/082, B23K 101/00, B23K 103/18

(54) **LASER-AUFTRAGSCHWEISSVERFAHREN UND -VORRICHTUNG MIT OSZILLIERENDER LASERSTRAHLUNG INNERHALB DER DÜSE**

(71) Anmelder: Siemens Aktiengesellschaft, 80333 München (DE); Fraunhofer-Gesellschaft zur Förderung der angewandten Forschung e.V., 80686 München (DE)
(72) Erfinder: Bostanjoglo, Georg, 14163 Berlin (DE); Burbaum, Bernd, 14612 Falkensee (DE); Weyland, Michael, 13587 Berlin (DE); Gasser, Andres, 52066 Aachen (DE); Linnenbrink, Stefanie, 52372 Kreuzau (DE); Mentzel, Frank, 52066 Aachen (DE); Pirch, Norbert, 52074 Aachen (DE)

(57) **Zusammenfassung**

Die Anmeldung betrifft eine Auftragschweissverfahren und eine entsprechende Vorrichtung (6), unter Verwendung eines oszillierenden Laserstrahl (7). Durch die oszillierende Bewegung des Laserstrahls (7) in der Düse (13) kann das Wobbel-Verfahren vereinfacht durchgeführt werden.

## Beschreibung

Die Erfindung betrifft ein Auftragschweißverfahren, bei dem mittels eines Energiestrahls Material oder Pulver aufgeschmolzen wird und auf ein Substrat aufgetragen wird, wobei der Energiestrahl innerhalb einer Düse oszilliert wird (Wobbeln).

Durch eine Wobbel-Strategie beim Auftragschweißen können eine Keimbildung und ein Kornwachstum in der mushy zone (breiige Zone) gezielt beeinflusst werden, so dass das Wachstum einer kolumnaren Erstarrungsfront unterdrückt bzw. vollständig vermieden wird.

Es ist daher Aufgabe der Erfindung ein Verfahren und eine Vorrichtung aufzuzeigen, die das Verfahren optimal umsetzt.

Die Aufgabe wird gelöst durch ein Verfahren gemäß Anspruch 1 und einer Vorrichtung gemäß Anspruch 2.

In den Unteransprüchen sind weitere vorteilhafte Maßnahmen aufgelistet, die beliebig miteinander kombiniert werden können, um weitere Vorteile zu erzielen.

Experimentelle Ergebnisse zeigen eine rissarme Gefügestruktur an Nickelbasis-Superlegierungen mit großem Anteil an intermetallischer Phase. Zudem kann mit diesem Verfahren eine große Aufbaurate bis zu 16 cm³/h oder mehr realisiert werden.

Zur Erfindung vorgeschlagen wird eine Kombination von Auftragschweißen, insbesondere mit Laser, mit oszillierender Strahlung. Für eine industrielle Umsetzung wird dabei eine herkömmliche Scannertechnologie eingesetzt. Diese wird entweder als Komplettsystem oder aus einzelnen Komponenten zusammengesetzt, verwendet. Zudem wird eine Düse für den Beschichtungsprozess mit dem Scanner verbunden, so dass

Scannersystem und Düse nicht relativ zu einander verfahren werden. Das Gesamtsystem wird während des
Beschichtungsprozesses verfahren. Der Energiestrahl kann je nach Bedarf während des Beschichtungsprozesses innerhalb der Düse gependelt bzw. oszilliert werden. Somit sind beide Beschichtungsverfahren flexibel einsetzbar und je nach Bedarf kann mit hoher Aufbaurate oder großer Konturgenauigkeit beschichtet werden.

Es zeigen
- Figur 1: eine erfindungsgemäße Vorrichtung und
- Figur 2, 3: Verfahrensschritte beim Auftragschweißen.

Die Figuren und die Beschreibung stellen nur Ausführungsbeispiele der Erfindung dar.

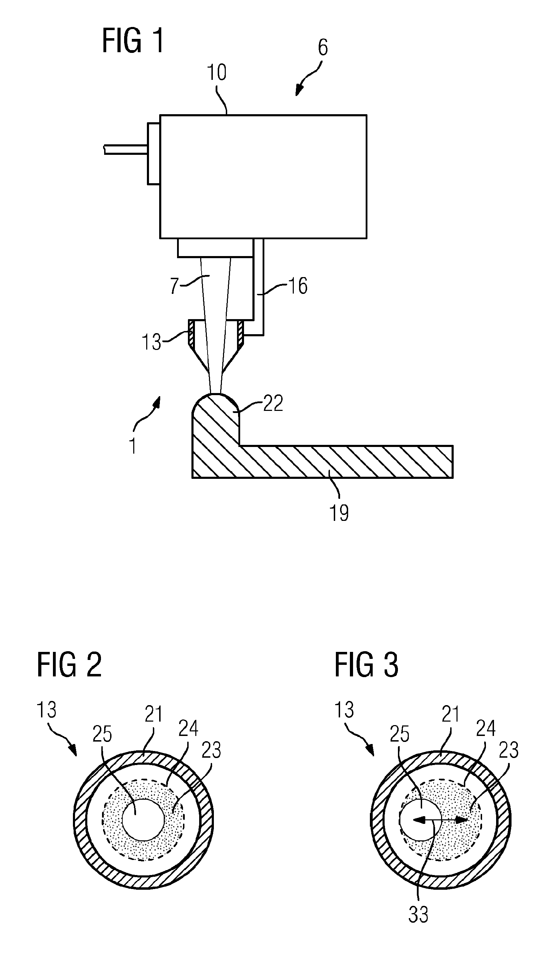

In Figur 1 ist eine erfindungsgemäße Vorrichtung 1 gezeigt. Die Vorrichtung 1 weist einen Laser 6 auf, bei dem ein Laserstrahl 7 des Lasers 6 mittels eines Scanners 10 durch eine Düse 13 geleitet wird.

Die Düse 13 ist durch eine Halterung 16 an dem Gehäuse des Scanners 10 befestigt, so dass diese mit dem Scanner 10 gegenüber einem Substrat 19 verfahren werden kann.

Weiterhin dargestellt ist ein aufgetragener Schweißbereich 22 auf dem Substrat 19, der mittels des Laserstrahl 7 erzeugt wurde.

In Figur 2 ist ein Querschnitt durch die Düse 13 gezeigt. Der Querschnitt zeigt die äußere Hülle 21 der Düse 13 und mit einem zentralen inneren Kreis 25, der den Querschnitt des Laserstrahls 7 darstellt.

Die äußere Kreislinie (gestrichelt) 24 zeigt den Querschnitt des Auftragswerkstoffs 23 bzw. des Pulverstroms 23.

Wie durch den Pfeil 33 in Figur 3 angedeutet, wird der Laserstrahl 7 vorzugsweise innerhalb der äußeren Kreislinie 24 des Auftragswerkstoffs 23 hin und her oszilliert oder pendeln gelassen.

Die Pendelbewegung des Laserstrahls 7 wird insbesondere durch den Scanner 10 gewährleistet.

Der Pulverstrom 23 wird insbesondere nicht pendeln oder oszillieren gelassen.

## Patentansprüche

1. Verfahren zum Auftragschweißen,
bei dem ein Auftragswerkstoff (23) auf ein Substrat (19) aufgetragen wird und
der Auftragswerkstoff (23) durch einen Laserstrahl (7) aufgeschmolzen wird,
wobei der Laserstrahl (7) durch eine Düse (13) geführt wird und
wobei der Laserstrahl (7) innerhalb der Düse (13) pendelnd oder oszillierend bewegt wird.

2. Vorrichtung,
insbesondere zur Durchführung eines Verfahrens nach Anspruch 1,
die einen Laser (6) aufweist,
wobei ein Laserstrahl (7) des Lasers (6) mittels eines Scanners (10) durch eine Düse (13) geführt werden kann, insbesondere wobei durch die Düse (13) Auftragswerkstoff (23) zugeführt wird und aus der Düse (13) herausströmt, und wobei Mittel vorhanden sind,
die den Laserstrahl (7) innerhalb der Düse (13) oszillieren oder pendeln lassen.

3. Verfahren oder Vorrichtung nach Anspruch 1 oder 2,
bei dem die Düse (13) durch eine Halterung (16) an dem Scanner (10),
der über ein Substrat (19) verfahren wird oder werden kann, befestigt ist.

4. Verfahren oder Vorrichtung nach einem oder mehreren der Ansprüche 1, 2 oder 3,
bei dem oder bei der der Auftragswerkstoff (23) pulverförmig ist.

5. Verfahren oder Vorrichtung nach einem oder mehreren der Ansprüche 1, 2, 3 oder 4,
bei dem oder bei der das Pulver durch die Düse (13) geleitet wird oder werden kann.
